Europäisches Patentamt

European Patent Office

Office européen des brevets

(19)

(11) Publication number: **0 375 039**
**A1**

(12) **EUROPEAN PATENT APPLICATION**

(21) Application number: **89203189.9**

(22) Date of filing: **14.12.89**

(51) Int. Cl.5: **B32B 15/01, C22C 38/00,**
**F16L 9/16, B21C 37/09**

(30) Priority: **16.12.88 NL 8803084**

(43) Date of publication of application:
**27.06.90 Bulletin 90/26**

(84) Designated Contracting States:
**AT BE CH DE ES FR GB GR IT LI LU NL SE**

(71) Applicant: **HOOGOVENS GROEP B.V.**
**P.O. Box 10.000**
**NL-1970 CA IJmuiden(NL)**

Applicant: **HILLE & MÜLLER**
**Am Trippelsberg 48 Postfach 13 04 80**
**D-4000 Düsseldorf 13(DE)**

(72) Inventor: **Schmidt, Ferdinand**
p/a Hille & Müller Am Trippelsberg 48
**D-4000 Dusseldorf 13 - Reisholz(DE)**
Inventor: **Koer, Jan Ferdinand**
**Mozartstraat 140**
**NL-1962 AG Heemskerk(NL)**
Inventor: **Dunnebier, Jacob Cornelis**
**Laanderweg 7**
**NL-1704 JT Heerhugowaard(NL)**

(74) Representative: **Van Breda, Jacobus, Mr. Ir. et**
**al**
**HOOGOVENS GROEP BV P.O. Box 10.000**
**NL-1970 CA IJmuiden(NL)**

(54) **Method for the manufacture of pipe from strip steel.**

(57) Use of a low carbon continuously cast steel which has an aluminium content less than 0.022 % by weight in the manufacture of pipes is advantageous when making pipes having walls of at least two layers and a diameter typically smaller than 16 mm. The method of manufacture involves successively hot rolling, cold rolling and coppering to produce a strip steel which is then rolled into a pipe having at least two layers. The pipe is then annealed so that the copper seals the two layers together. Such pipes are particularly suitable for hydraulic applications, such as brake lines in cars.

## METHOD FOR THE MANUFACTURE OF PIPE FROM STRIP STEEL

The invention relates to a method for the manufacture of a pipe from strip steel and to such pipe. The pipe produced finds application in hydraulic systems and appliances.

It is known to make pipes suitable for hydraulic applications from continuously cast low-carbon steel with an aluminium content lower than 0.075 % by weight by successively hot-rolling, cold-rolling and coppering to produce a coppered strip steel. The strip steel is rolled to form a pipe comprising at least two layers which is then re-annealed to fuse and seal the copper between the layers. A double-walled pipe may be made from a double strip rather than by multiple turns of a single strip. Such a pipe may be used for brake lines in cars. One quality desideratum for such pipe is that the copper covering should fuse the steel so as to solder the layers of the pipe together over the entire contact surface as far as possible without interruption.

US-A-2014983 illustrates such pipe, without defining the steel used or its manufacture. "Metals Handbook - Properties and Selections: Irons and Steels" Vol. 1, edition 9, American Society for Metals, 1978, pages 321-3 describes double-walled brazed tubes and steels for making them, but does not refer to Al content.

It has been found that the kind of strip steel currently used which is a continuously cast material, is not satisfactory for forming pipes of a diameter larger than approx. 6 mm as the layers can not be soldered together completely. The pipes manufactured can be tested in this respect by the eddy current testing method. If a pipe with negative test results is sawn through, it is found that the layers are not joined together along the whole circumference. Attempts have been made in the past to get round this problem by adding boron to the steel, but this was not found to be of sufficient help.

The present invention is based on the discovery that significant improvements are made when a steel having an aluminium content of less than 0.022 % by weight is used. It has been found that this steel makes good pipes which have a diameter greater than 6 mm.

It is believed that this occurs because the strip steel in accordance with the invention has a more regular structure (so-called equi-axed structure) than strip steel previously used for making pipes, which was continuously cast material, in which the aluminium content could lie between 0.025 and 0.075 % by weight. These latter kinds of strip steel have the so-called pancake structure associated with that.

It is mentioned that continuously cast steel strip with Al content of 0.015% maximum is in itself known from GB-A-1123778. This low level of Al is chosen in this case to avoid the formation of excessive quantities of non-metallic inclusions, particularly because the presence of alumina in large amounts in such inclusions are said to cause problems in the mould. In recent years, however, it has not been the practice to control Al to low levels in continuous casting. Indeed, conventionally steel is Al-killed.

According to a first aspect of the present invention there is provided a method for manufacturing a pipe from continuously cast low carbon steel having an aluminium content below 0.022 % by weight which comprises hot-rolling, cold-rolling and coppering the steel to form a coppered strip steel, rolling the strip steel into a pipe having at least two layers, and heating the pipe so that the copper between the layers fuses them together. Preferably the pipe has an outside diameter of less than 16 mm and a wall thickness of less than 1 mm.

According to a second aspect of the invention there is provided a pipe having a wall of at least two layers and suitable for hydraulic applications, which is roll-formed from a low carbon coppered strip steel having an aluminium content of less than 0.022 % by weight. The invention extends to the use of such a pipe in a hydraulic system, e.g. a vehicle braking system.

It is preferred to set the aluminium content as low as possible, in particular lower than about 0.012 % by weight and more preferably even lower than about 0.005 % by weight. Boron may be substantially absent. A low carbon steel in this context is typically steel containing less than 0.20 % by weight C, preferably not more than 0.10% by weight.

The invention will now be illustrated with reference to an example.

## EXAMPLE

Various continuously cast steels are prepared by hot-rolling and cold-rolling into strip and coppering. The coppered strip steels are then wound into pipes, whereby each pipe comprises at least two turns. The pipes were annealed to fuse the copper layers between the turns. The manufactured pipes have a diameter lying in the range 4.7-12 mm.

Table 1 gives three different steel analyses of the continuously cast steels used. Each had a different result from the eddy current test used.

The steel given in column 1 is a known continuously cast steel which gives a poor result. The steel given in column 2 is likewise a known steel to which boron has been added. The pipes produced with this steel give better results than the known kind of steel of column 1.

However, the invention is exemplified by continuously cast strip steel as stated in column 3. No boron is added to this steel and in this example the aluminium content is set to a value of about 0.005 % by weight. As measured by eddy current testing, the pipes made with this steel have considerably better quality than those made with steels 1 and 2.

Continuously cast steel

Table 1

| | % by weight | | |
|---|---|---|---|
| | 1 | 2 | 3 |
| C | 0.050 | 0.050 | 0.050 |
| Mn | 0.22 | 0.22 | 0.22 |
| Al | 0.050 | 0.050 | 0.005 |
| N | 0.0030 | 0.0020 | 0.0020 |
| B | -- | 0.0050 | -- |

## Claims

1. A method for manufacturing a pipe from continuously cast low carbon steel which comprises hot rolling, cold rolling and coppering the steel to form a coppered strip steel, rolling the strip steel into a pipe having at least two layers, and heating the pipe so that the copper between the layers fuses them together, characterized in that the steel has an aluminium content below 0.022 % by weight.

2. A method according to claim 1 wherein the aluminium content of the steel is less than 0.012 % by weight.

3. A method according to claim 1 or claim 2 wherein the aluminium content of the steel is not more than 0.005 % by weight.

4. A pipe made of a low carbon coppered strip steel and having its wall formed of at least two layers bonded by fusion of the copper characterized in that the aluminium content of the steel is less than 0.022 % by weight.

5. A pipe according to claim 4 wherein the aluminium content is less than 0.012 % by weight.

6. A pipe according to claim 5 wherein the aluminium content is not more than 0.05 % by weight.

7. Use of a pipe according to any one of claims 4 to 6 in a hydraulic system.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | METALS HANDBOOK, vol. 1, 9th edition, 1978, pages 321-323, ASM, Ohio, US; "Pressure tubes" * Pages 321-323 * | 1 | B 32 B 15/01<br>C 22 C 38/00<br>F 16 L 9/16<br>B 21 C 37/09 |
| D,Y | GB-A-1 123 778 (U.S. STEEL CORP.) * Claims; examples * | 1 | |
| A | US-A-2 014 983 (B.L. QUARNSTROM) | | |
| A | DE-A-2 757 311 (USUI KOKUSAI SANGYO) | | |
| A | DE-A-1 951 141 (TEXAS INSTRUMENTS) | | |
| A | DE-A-1 812 774 (BETHLEHEM STEEL) | | |

TECHNICAL FIELDS
SEARCHED (Int. Cl.5)

B 32 B
C 22 C
F 16 L
B 21 C

The present search report has been drawn up for all claims

| Place of search | Date of completion of the search | Examiner |
|---|---|---|
| THE HAGUE | 14-03-1990 | MOLLET G.H.J. |